# EUROPÄISCHE PATENTANMELDUNG

(11) **EP 4 063 902 A1**
(43) Veröffentlichungstag der Anmeldung: **28.09.2022**
(21) Anmeldenummer: 22155140.1
(22) Anmeldetag: 04.02.2022
(51) Int. Cl.: G01S 7/481, G01S 7/497, G01S 17/42

(54) **OPTOELEKTRONISCHER SENSOR UND VERFAHREN ZUR ERFASSUNG VON OBJEKTEN**

(30) Priorität: 23.03.2021 DE 102021107194
(71) Anmelder: SICK AG, 79183 Waldkirch (DE)
(72) Erfinder: Baldischweiler, Boris, 79194 Gundelfingen (DE); Ringwald, Siegfried, 79215 Elzach (DE)

(57) **Zusammenfassung**

Es wird ein optoelektronischer Sensor (10) zur Erfassung von Objekten (40) in einem Erfassungsbereich (18) angegeben, der einen Lichtsender (12) zum Aussenden eines Sendelichtbündels (16), eine Ablenkeinheit (20) zum Ablenken des Sendelichtbündels (16) in verschiedene Ablenkwinkel zur Abtastung des Erfassungsbereichs (18), einen Lichtempfänger (28) zum Erzeugen eines Messsignals aus dem von den Objekten (40) remittierten Sendelichtbündel (24) und einen Referenzlichtempfänger (36) zum Erzeugen eines Referenzsignals aus einem intern von dem Sendelichtbündel (16) abgeleiteten Referenzlichtbündel (34) sowie eine Steuer- und Auswertungseinheit (30) aufweist, die dafür ausgebildet ist, das Messsignal auszuwerten, um eine Eigenschaft des Objekt (40) zu erfassen und aus dem Referenzsignal den Ablenkwinkel zu bestimmen oder zu überprüfen.

## Beschreibung

Die Erfindung betrifft einen optoelektronischen Sensor und ein Verfahren zur Erfassung von Objekten nach dem Oberbegriff von Anspruch 1 beziehungsweise 15.

Optische Abtastung wird schon lange in Laserscannern eingesetzt. Dabei überstreicht ein von einem Laser erzeugter Lichtstrahl mit Hilfe einer Ablenkeinheit periodisch den Überwachungsbereich. In den meisten Laserscannern wird die Abtastbewegung durch einen Drehspiegel oder ein Spiegelrad mit mehreren Facetten erreicht. Es ist auch bekannt, stattdessen den gesamten Messkopf mit einem oder mehreren Lichtsendern und Lichtempfängern rotieren zu lassen, wie dies beispielsweise in DE 197 57 849 B4 beschrieben ist. In wieder anderen Systemen wird eine Ablenkeinheit hin- und herverschwenkt. Jegliche mechanische Bewegung führt jedoch zu einer gewissen Baugröße und Stoßempfindlichkeit sowie zu Wartungsanfälligkeit infolge von Verschleiß.

Um dies zu vermeiden, gibt es im Stand der Technik Bestrebungen, sogenannte Solid-State-Scanner aufzubauen, also scannende Systeme ohne rotierende Ablenkeinheit oder vergleichbare bewegte mechanische Teile. Beispielsweise wird in der EP 2 708 914 A1 der gepulste Sendelichtstrahl einer Lichtquelle mit einem MEMS-Spiegel (Micro Electro Mechanical System) in X-Richtung und Y-Richtung über die abzutastende Fläche geführt. Die reflektierten Lichtpulse werden von einem Bildsensor mit zahlreichen Pixeln empfangen, von der jeweils nur diejenigen aktiviert werden, die einen aktuell von dem Sendelichtstrahl beleuchteten Bereich beobachten. Eine weitere Besonderheit in der EP 2 708 914 A1 ist die Verwendung von SPADs (Single-Photon Avalanche Diode) für die Pixel des Bildsensors. SPADs sind Lawinenphotodioden, die im sogenannten Geiger-Modus betrieben werden. Sie werden dazu oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. SPADs sind nicht nur hochempfindlich, sondern zugleich auch hochintegrierbar.

Ein MEMS-Spiegel ist nur eine von mehreren Möglichkeiten, eine Strahlablenkung ohne bewegte mechanische Teile zu verwirklichen. Gemeinsam ist diesen Strahlablenkungen, dass sie allenfalls auf mikromechanischer Ebene eine Bewegung erzeugen, wie im Falle von Mikrospiegeln, und jeweils beispielsweise durch Anlegen einer elektrischen Spannung ihre optischen Eigenschaften verändern, um den Ablenkwinkel einzustellen. Einen Motor oder mechanisch bewegte Teile wie einen Drehspiegel, ein Polygonspiegelrad oder einen Schwenkmechanismus gibt es nicht.

Zur Auswertung der Empfangssignale aus den jeweiligen Ablenkwinkeln wird meist mit einem Lichtlaufzeitverfahren der Abstand zu dem angetasteten Objekt gemessen. In einem Pulsverfahren werden dafür Lichtpulse ausgesandt, und es wird die Dauer zwischen Sende- und Empfangszeitpunkt gemessen. Die Lichtlaufzeit kann unmittelbar aus einem Einzelpuls bestimmt werden, oder es werden in einem Pulsmittelungsverfahren zahlreiche schwächere Pulse nacheinander ausgesandt und die jeweiligen Laufzeiten in einem Histogramm gesammelt, aus dem dann eine gemeinsame Lichtlaufzeit ermittelt wird. In einem Phasenverfahren erfolgt eine periodische Amplitudenmodulation und Messung des Phasenversatzes zwischen Sende- und Empfangslicht. Abstandsmessende Sensoren nach einem Lichtlaufzeitprinzip werden auch LiDAR-Sensoren (Light Detection and Ranging) genannt.

Bei einer Lichtlaufzeitmessung ist in den realen Messwerten die Laufzeit des reinen Lichtwegs zwischen Sensor und Objekt von verschiedenen elektronischen und optischen Verzögerungen überlagert. Diese können sich von Empfangskanal zu Empfangskanal unterscheiden, und es sind wenigstens teilweise dynamische Drifteffekte aufgrund von Alterung, Temperatur und sonstigen Umgebungsbedingungen. Eine bekannte Kompensationsmaßnahme ist eine optische Referenzmessung. Die DE 10 2017 101 501 B3 beispielsweise bestimmt die Lichtlaufzeit als Differenz der Ergebnisse einer Lichtlaufzeitmessung und einer Referenzzeitmessung.

Neben der gemessenen Abstandsinformation wird in einem Laserscanner die Winkellage der Ablenkeinheit und damit des Objektes bestimmt, und so entstehen nach einer Abtastperiode Messpunkte mit Abstands- und Winkelwerten in Polarkoordinaten. Durch zusätzliche Variation oder Mehrstrahlabtastung im Elevationswinkel werden dreidimensionale Messpunkte aus einem Raumbereich erzeugt. Die Abtastung erfordert zwar besonders im Falle der 3D-Erfassung gegenüber Kameras eine gewisse Messzeit, aber dafür konzentriert sich die Messung auf einen Punkt und gewinnt dadurch Reichweite und verlässlichere Messwerte.

In einem herkömmlichen Laserscanner kann die Winkellage des rotierenden Spiegels oder Messkopfes mit einem Encoder bestimmt werden. Bei einem Solid-State-Sensor ist das mangels bewegter Elemente nicht möglich. Zwar wird der Scanstrahl in einen bestimmten Ablenkwinkel gesteuert. Es gibt aber keine mechanische oder elektrische Funktion, um sich zu vergewissern, ob diese Ansteuerung tatsächlich zu dem gewünschten Ablenkwinkel führt und nicht beispielsweise zu einem abweichenden Ablenkwinkel, oder ob bei einem Defekt womöglich gar keine Ablenkung erzielt wird.

Eine weitere übliche Funktion herkömmlicher Laserscanner ist die Überprüfung der Signalkette einschließlich der Ausgangsleistung des Lasers durch ein Referenzziel in einem hinteren Totwinkelbereich. Das Referenzziel ist zudem für die oben schon angesprochene optische Referenzmessung zur Laufzeitkorrektur nutzbar. Diesen Totwinkelbereich gibt es bei Solid-State-Sensoren nicht, so dass ein anderes Referenzkonzept erforderlich wird.

In der DE 10 2018 124 835 B3 wird ein optoelektronischer Sensor vorgestellt, der mit einem Referenzziel in bestimmten, vorzugsweise außerhalb des Sichtfeld liegenden Ablenkwinkeln zumindest einen Teil des abgelenkten Sendelichtstrahls auf den Lichtempfänger zurückführt und mit diesem Referenzsignal prüft, ob die Ablenkung noch funktioniert. Das löst allenfalls einen Teil der genannten Probleme. Eine Überprüfung nur für bestimmte Ablenkwinkel deckt einen Totalausfall der Ablenkeinheit auf. Das ermöglicht aber keine verlässlichen Rückschlüsse darauf, dass alle Ablenkwinkel wie gewünscht eingenommen werden, denn während des eigentlichen Scannens wird der Ablenkwinkel nicht gemessen, sondern auf die Ansteuerung vertraut. Außerdem wird die Lichtlaufzeitmessung nicht korrigiert.

Die US 2017/0244955 A1 offenbart einen Scanner zur 3D-Erfassung, der einen Drehspiegel oder alternativ ein MEMS-System einsetzt. In mindestens einem Scanwinkel außerhalb des Sichtfeldes ist eine zusätzliche Photodiode angeordnet. Registriert diese Photodiode den Scanstrahl nicht regelmäßig, so wird die Ablenkung als nicht mehr intakt angesehen. Erneut ist damit über das Verhalten des Scanstrahls und dessen Ablenkwinkel im eigentlichen Scanbereich nichts bekannt.

Die DE 10 2018 212 529 A1 offenbart ein Verfahren und Steuergerät zum Regeln einer emittierten Lichtleistung einer Lichtquelle eines optischen Sensorsystems. Dafür wird ein Teil des emittierten Lichts auf ein Sensorelement umgeleitet. Dabei wird zwar kurz ein LiDAR erwähnt. Das Sensorelement wird aber weder mit einer Lichtlaufzeitmessung noch einem Ablenkwinkel in Verbindung gebracht, sondern überwacht lediglich die Lichtleistung.

Aus der EP 3 367 129 B1 ist ein Laserscanner bekannt, der den herkömmlichen Encoder zur Bestimmung der jeweiligen Winkelstellung der Ablenkeinheit durch eine Auswertung der Amplitude von Streulicht ersetzt. Ein Streulichtempfänger sitzt in einer bestimmten Winkelposition und empfängt daher je nach Drehstellung der Ablenkeinheit mehr oder weniger Streulicht. Es ist schwierig, damit eine hohe Messgenauigkeit des Ablenkwinkels zu erzielen. Ferner wird die Amplitudenschwankung maßgeblich dadurch erzielt, dass die Ablenkeinheit dem Streulichtempfänger abgewandte Winkellagen Drehstellungen einnimmt, und das ist in dieser Form auf einen Solid-State-Sensor nicht übertragbar.

Es ist daher Aufgabe der Erfindung, ein alternatives Konzept für eine Referenzmessung mit Überwachung der Ablenkeinheit anzugeben, das insbesondere auch in Solid-State-Sensoren einsetzbar ist.

Diese Aufgabe wird durch einen optoelektronischen Sensor und ein Verfahren zur Erfassung von Objekten nach Anspruch 1 beziehungsweise 15 gelöst. Es wird ein Sendelichtbündel ausgesandt und das von den Objekten remittierte Sendelichtbündel wieder empfangen. Um den Erfassungsbereich abzutasten, lenkt eine Ablenkeinheit das Sendelichtbündel in unterschiedliche Ablenkwinkel. Die Abtastung folgt einem zunächst beliebigen Muster und kann dabei gleichmäßig sein, aber auch bestimmte Teilbereiche (ROI, Region of Interest) häufiger und andere gar nicht betreffen. Ein Lichtempfänger erzeugt ein Messsignal aus dem remittierten Sendelichtbündel. Ein Referenzlichtempfänger erzeugt ein Referenzsignal aus einem internen Referenzlichtbündel, das intern innerhalb des Sensors aus dem Sendelichtbündel beispielsweise durch Umlenken eines Teilquerschnitts oder eine Teilreflexion abgeleitet ist. Eine Steuer- und Auswertungseinheit wertet das Messsignal aus, um eine Eigenschaft des angetasteten Objekts zu bestimmen, insbesondere dessen Abstand aus einer Lichtlaufzeit des ausgesandten und wieder empfangenen Sendelichtbündels.

Die Erfindung geht von dem Grundgedanken aus, das Referenzsignal für eine zusätzliche Funktion zu nutzen und es auf eine dafür geeignete Weise zu erzeugen. Herkömmlich wird das Referenzsignal für eine Überwachung des Lichtsenders, der grundsätzlichen Einsatzbereitschaft der Ablenkeinheit oder eine Korrektur der Lichtlaufzeit verwendet. Das alles ist erfindungsgemäß auch möglich. Die erfindungsgemäße zusätzliche Funktion jedoch ist, den Ablenkwinkel aus dem Referenzsignal zu messen.

Die Erfindung hat den Vorteil, dass der Sensor den tatsächlichen Ablenkwinkel kennt. Das kann eine Überwachungsfunktion haben, um Fehler der Ablenkeinheit oder in deren Ansteuerung aufzudecken und damit unter anderem den Augenschutz zu gewährleisten. Weiterhin ermöglicht es eine Regelung, um den tatsächlichen Ablenkwinkel erforderlichenfalls auf den gewünschten Ablenkwinkel zu korrigieren. Alternativ wird den gemessenen Objekteigenschaften, insbesondere den Objektabständen, der tatsächliche Ablenkwinkel zugeordnet, um die Ortsauflösung in Wnkelrichtung zu verbessern. In einem herkömmlichen Laserscanner kann durch die erfindungsmäße Bestimmung des Ablenkwinkels der bisherige Encoder ersetzt oder ergänzt werden. Der konstruktive Aufwand ist klein, insbesondere, wenn wie bevorzugt für die Erzeugung des Referenzlichtbündels eine ohnehin vorhandene Frontscheibe genutzt wird. Zudem ist eine kostengünstige Herstellung der benötigten optischen Komponenten im Spritzguss möglich. Ein großer Vorzug der Erfindung ist, dass der Ablenkwinkel auch in einem Solid-State-Sensor gemessen werden kann, in dem die Encoderlösung herkömmlicher Laserscanner nicht zur Verfügung steht.

Der Lichtempfänger weist bevorzugt eine Vielzahl von Lichtempfangselementen auf, insbesondere SPADs, die jeweils unterschiedlichen Ablenkwinkeln zugeordnet sind. Empfangsseitig ist in dieser Ausführungsform kein eigentliches Scanprinzip eingesetzt, sondern es wird der gesamte Erfassungsbereich zugleich erfasst, in dem jeweils nur ein bestimmter Bereich von dem Sendelichtbündel beleuchtet wird. Die Lichtempfangselemente sind vorzugsweise SPADs mit den einleitend genannten Vorteilen einer besonders hohen Empfindlichkeit und Integrationsfähigkeit. Die Lichtempfangselemente bilden insbesondere eine Pixelzeile oder Pixelmatrix, wobei jedes Pixel ein eigenes Lichtempfangselement sein kann oder Pixelbereiche gruppenweise zu einer Art Makropixel zusammengefasst sein können, die dann gemeinsam eines der Lichtempfangselemente bilden. Hierbei wiederum ist sowohl eine fixe als auch dynamische Gruppenzugehörigkeit denkbar. Alternativ zu einem ortsaufgelösten Lichtempfänger ist ein scannendes Empfangssystem vorstellbar.

Die Steuer- und Auswertungseinheit ist bevorzugt dafür ausgebildet, jeweils nur diejenigen Lichtempfangselemente zu aktivieren oder auszulesen, die dem jeweiligen aktuellen Ablenkwinkel entsprechen. Damit wird empfangsseitig mit einem ortsaufgelösten Lichtempfänger eine Art Scanprinzip durch rein elektronische Ansteuerung verwirklicht. Es bewegt sich sozusagen ein Aktivitätsspot entsprechend der Ablenkung des Sendelichtbündels über den Lichtempfänger und damit typischerweise regelmäßig beispielsweise zyklisch über eine Zeile oder zeilenweise über eine Matrix. Durch die selektive Aktivierung oder das selektive Auslesen werden keine Empfangssignale von Lichtempfangselementen erzeugt oder ausgewertet, die beim aktuellen Ablenkwinkel des Sendelichtbündels zum Messsignal gar nicht beitragen können.

SPADs als Lichtempfangselemente können bevorzugt dadurch inaktiv geschaltet werden, dass die Vorspannung unter die Durchbruchspannung abgesenkt wird. Sie verlieren dann um mehrere Größenordnungen an Empfindlichkeit und können deshalb als ausgeschaltet angesehen werden. Das Inaktivschalten hat auch den Vorteil, dass keine unnötigen Lawinen ausgelöst werden, die nur Stromaufnahme und Wärmeentwicklung beitragen. Es ist aber auch unabhängig von der Technik möglich, die nicht benötigten Lichtempfangselemente aktiv zu lassen und lediglich deren Empfangssignal nicht auszulesen oder in der Auswertung nicht zu beachten. Statt auf Ebene des Lichtempfängers kann zuvor optisch dafür gesorgt werden, dass die nicht benötigten Lichtempfangselemente kein Licht empfangen, etwa mit einem elektro-optischen Shutter. Dunkelrauschen wird so aber nicht eliminiert, und gerade bei SPADs kann dies einen erheblichen Anteil haben.

Der Referenzlichtempfänger weist bevorzugt eine Vielzahl von Referenzlichtempfangselementen auf, die jeweils unterschiedlichen Ablenkwinkeln zugeordnet sind. Der Referenzlichtempfänger ist somit ortsauflösend. Die Referenzlichtempfangselemente können als Pixel bezeichnet werden, und für deren Ausgestaltung und Anordnung gilt sinngemäß das gleiche wie für die Lichtempfangselemente auf dem Lichtempfänger. Insbesondere ist eine Zeilen- oder Matrixanordnung der Referenzlichtempfangselemente möglich.

Die Steuer- und Auswertungseinheit ist bevorzugt dafür ausgebildet, den Ablenkwinkel aus dem Auftreffort des Referenzlichtbündels auf dem Referenzlichtempfänger zu bestimmen, insbesondere anhand des Referenzlichtempfangselementes, das ein Referenzsignal erzeugt. Damit wird die Ortsauflösung des Referenzlichtempfängers ausgenutzt, um den Ablenkwinkel zu messen oder zu überprüfen. Die Identität oder Position desjenigen Referenzlichtempfangselementes, das ein Referenzsignal liefert, korrespondiert mit dem aktuellen Ablenkwinkel. In einer Ausführungsform wird festgestellt, welches Referenzlichtempfangselement das Referenzlichtbündel detektiert, und daraus wird auf den Ablenkwinkel rückgeschlossen. In einer anderen Ausführungsform wird aus dem angesteuerten Ablenkwinkel eine Erwartung gewonnen, welches Referenzlichtempfangselement das Referenzlichtbündel detektieren sollte und gezielt geprüft, ob von diesem erwarteten Referenzlichtempfangselement tatsächlich ein Referenzsignal erzeugt wird. Der Lichtempfänger selbst könnte diese Funktion im Übrigen nicht ohne Weiteres übernehmen. Ob ein remittiertes Sendelichtbündel aus dem aktuellen Ablenkwinkel zurückkommt, hängt von der Szenerie und den dort befindlichen Objekten ab. Das Referenzbündel auf den Lichtempfänger zu leiten ist prinzipiell denkbar, aber dann überlagern sich dort Messsignal und Referenzsignal. Das führt zu Schwierigkeiten und Ungenauigkeiten. Insbesondere SPAD-Lichtempfangselemente würden direkt zu Beginn der Messung von dem Referenzsignal in die Totzeit versetzt und könnten das remittierte Sendelichtbündel gar nicht mehr beziehungsweise erst aus einem Abstand registrieren, zu dem die Lichtlaufzeit größer ist als eine Erholungszeit der SPAD-Lichtempfangselemente.

Die Steuer- und Auswertungseinheit ist bevorzugt dafür ausgebildet, mit Hilfe der Ablenkeinheit periodisch eine Zeile und/oder ein zweidimensionales Muster abzutasten. Bei Abtastung einer Zeile ist der Sensor ein Zeilenscanner, der eine Ebene oder einen Ausschnitt einer Ebene abtastet. Mit einem zweidimensionalen Muster wird eine flächige und damit umfassendere Abtastung ermöglicht. Das zweidimensionale Muster kann natürlich künstlich auf eine Zeile begrenzt werden, dann entsteht trotzdem ein Zeilenscanner. Ein typisches Muster sieht vor, nacheinander leicht versetzte Zeilen beziehungsweise Spalten und damit systematisch eine Fläche abzutasten. Prinzipiell ist aber jegliches periodische und nicht periodische Muster vorstellbar, das beispielsweise bestimmte Teilbereiche öfter abtastet als andere, bis hin zu einem Zufallsmuster. Da erfindungsgemäß der Ablenkwinkel gemessen werden kann, ist sogar vorstellbar, die Ablenkeinheit beliebig ohne sendeseitige Kenntnis anzusteuern und die Messwerte dann dem aus dem Referenzsignal bestimmten Ablenkwinkel zuzuordnen.

Die Ablenkung erfolgt bevorzugt ohne Bewegung von mechanischen Teilen, allenfalls von mikromechanischen Teilen. Der Sensor ist damit ein Solid-State-Scanner oder -Sensor. Besonders bevorzugt weist die Ablenkeinheit einen MEMS-Spiegel, ein schaltbares Flüssigkristallelement, ein Optical Phased Array, einen akusto-optischen Modulator, einen elektro-optischen Modulator oder eine kippbare Flüssiglinse auf. Erfindungsgemäß wird der Ablenkwinkel messbar, obwohl herkömmliche Encoder und dergleichen in einem Solid-State-Sensor nicht verwendbar sind. Alternativ ist ein herkömmlicher Schwing- oder Drehspiegel beziehungsweise entsprechend bewegter Messkopf vorstellbar. Die erfindungsgemäße Bestimmung des Ablenkwinkels ist dann eine Alternative zu den bisher eingesetzten Encodern. Eine Ablenkung in zwei Richtungen kann sich aus zwei Solid-State-Ablenkungen oder aus einem Hybrid aus makroskopischer Ablenkeinheit und Solid-State-Ablenkeinheit zusammensetzen.

Der Sensor weist bevorzugt zur Erzeugung des Referenzlichtbündels ein optisches Referenzauskopplungselement im Strahlengang des Sendelichtbündels auf. Damit wird ein Teil des bereits abgelenkten Sendelichtbündels oder einer Teilauskopplung davon intern, d.h. innerhalb des Sensors, als das Referenzlichtbündel zurückgeführt. Der optische Effekt für die Auskopplung des Referenzlichtbündels soll hier zunächst nicht eingeschränkt sein und beispielsweise eine Lichtumlenkung oder eine Reflexion beziehungsweise Teilreflexion einschließen. Als Lichtumlenkung ist beispielsweise ein Prisma, eine Lichtleiterschleife oder dergleichen denkbar, die einen Teil des Sendelichtbündels in eine andere Richtung führt. Ein mindestens teilreflektierendes Referenzauskopplungselement wirft einen Teil des Sendelichtbündels direkt oder indirekt zurück. Die gewünschte Auskopplung des Referenzlichtbündels in den verschiedenen Ablenkwinkel kann durch geometrische Gestaltung, insbesondere Krümmung, und/oder eine Vielzahl von Unterelementen des Referenzauskopplungselements erzeugt werden.

Das optische Referenzauskopplungselement ist bevorzugt an einer Frontscheibe des Sensors angeordnet oder in die Frontscheibe integriert. Insbesondere erfüllt damit die Frontscheibe eine platz- und kostensparende Doppelfunktion, indem sie die Referenzauskopplung durch Formgebung, Strukturierung, Beschichtung und dergleichen zusätzlich leistet. Die Frontscheibe umfasst bestimmungsgemäß sämtliche relevanten Ablenkwinkel, so dass dort eine Auskopplung des Referenzlichtbündels für alle Ablenkwinkel des abgelenkten Sendelichtbündels möglich ist. Ein Frontscheibenreflex entsteht ohnehin, üblicherweise als Störeffekt, und dieser kann erfindungsgemäß sinnvoll genutzt werden.

Das Referenzauskopplungselement weist bevorzugt in einem Querschnitt eine gekrümmte Form auf. Damit lassen sich auf besonders einfache Weise für alle Ablenkwinkel geeignete Referenzlichtbündel erzeugen. Die Krümmung kann durch einen Kreisbogen vorgegeben sein, es ist aber auch eine asphärische Form denkbar, von der Ellipse bis zur Freiform. Vorzugsweise variiert die Krümmung nur monoton, dann bleibt die räumliche Zuordnung zwischen Sendelichtbündel und daraus erzeugtem Referenzlichtbündel erhalten. Ein Referenzauskopplungselement, das das Referenzlichtbündel durch seine Form erzeugt, ist besonders in Anordnung an oder Integration in die Frontscheibe von Vorteil. Das Referenzauskopplungselement weist diese Form vorzugsweise in allen Querschnitten auf, wobei eine Variation nicht prinzipiell ausgeschlossen ist, insbesondere eine formerhaltende, nur skalierende Verengung oder Erweiterung. In der Höhenrichtung senkrecht zu den Querschnitten ist vorzugsweise eine gerade Kontur vorgesehen, alternativ ist eine Krümmung oder Freiform denkbar.

Das Referenzauskopplungselement weist bevorzugt eine Vielzahl von Mikrospiegeln oder Mikroprismen auf. Mit Mikrospiegeln kann insbesondere eine gekrümmte Form beliebiger Art diskretisiert werden. Andere Strukturen wie Mikroprismen können eine Formgebung unterstützen oder ersetzen. Die Mikrospiegel oder Mikroprismen können als Mikrostruktur auf die Frontscheibe aufgebracht werden, oder die Frontscheibe wird mit dieser Mikrostruktur hergestellt. Ein separates Referenzauskopplungselement ist grundsätzlich alternativ denkbar.

Das Referenzauskopplungselement ist bevorzugt in einer Elevationsrichtung gegenüber dem Sendelichtbündel geneigt angeordnet. Das Referenzauskopplungselement steht folglich nicht senkrecht, sondern schräg zu dem Sendelichtbündel. Das korrespondiert vorteilhafterweise mit einem Lichtsender und einem Referenzlichtempfänger, die übereinander angeordnet sind. Die Neigung des Referenzauskopplungselements sorgt dann dafür, dass die Referenzlichtbündel in der richtigen Höhe oder Elevation auf den Referenzlichtempfänger treffen. Bei dieser Ausführungsform ist vorzugsweise an einen Ablenkwinkel mit nur einem Freiheitsgrad gedacht, d.h. einer Abtastung einer Ebene oder eines Ausschnitts einer Ebene. Dieser variierende Ablenkwinkel wird nach der üblichen Terminologie als Azimut bezeichnet, die Neigung des Referenzauskopplungselements betrifft die dazu senkrechte Höhenrichtung, die Elevationsrichtung genannt wird. Die Neigung des Referenzauskopplungselements ist aber auch bei einem in zwei Freiheitsgraden variierenden Ablenkwinkel aus den gleichen Gründen von Vorteil.

Eine innere Grenzfläche und eine äußere Grenzfläche des Referenzauskopplungselements sind vorzugsweise zueinander geneigt. Das kann als Keilform bezeichnet werden, und dies bezieht sich vorzugsweise wieder auf die Elevations- oder Höhenrichtung. Im Azimut ist das Referenzauskopplungselement vorzugsweise gekrümmt, dort ließe sich eine Neigung gar nicht so einfach definieren. Die beiden Grenzflächen unterschiedlicher Neigung erzeugen zwei Reflexe in entsprechend dem gegenseitigen Neigungswinkel unterschiedliche Richtungen. Das kann beispielsweise genutzt werden, um den Reflex von der äußeren Grenzfläche von dem Referenzlichtempfänger wegzuspiegeln und nur den Reflex von der inneren Grenzfläche zu nutzen oder umgekehrt. Allgemein entstehen so zwei unterschiedliche Reflexionen, die beide als Referenzlichtbündel genutzt werden können. Beispielsweise wird der Referenzlichtempfänger in dem Referenzlichtbündel der inneren Grenzfläche positioniert und ein weiteres Empfangselement in dem Referenzlichtbündel der äußeren Grenzfläche oder umgekehrt.

Das Referenzauskopplungselement weist bevorzugt eine Strukturierung mindestens einer Grenzfläche auf. Das können einmal die bereits angesprochenen Mikrospiegel oder Mikroprismen sein. Ferner sind diffraktive Strukturen oder allgemeiner eine Nanostrukturierung möglich. Mit solchen Strukturierungen lässt sich ein ähnlicher Effekt erzielen wie mit einer Keilform, als Ersatz oder in Ergänzung, d.h. es werden an den beiden Grenzflächen zwei zueinander versetzte Referenzlichtbündel erzeugt. Schließlich ist eine Antireflexbeschichtung vorstellbar. Der Frontscheibenreflex wird dadurch geschwächt, ist aber typischerweise immer noch stark genug, um verlässlich detektierbare Referenzlichtbündel zu erzeugen. Nach außen hin verhindert oder schwächt eine Antireflexbeschichtung störende und schwächende Reflexe des remittierten Empfangslichtbündels.

Die Steuer- und Auswertungseinheit ist bevorzugt dafür ausgebildet, die gemessene Lichtlaufzeit anhand des Referenzsignals zu korrigieren, insbesondere mit einem zweiten Referenzlichtempfänger. Das Referenzsignal wird in dieser Ausführungsform als optische Referenz zur Kompensation von Laufzeitunterschieden genutzt, um so wesentlich robustere und genauere Abstandswerte zu gewinnen. Bevorzugt bildet das Referenzsignal einen Zeitnullpunkt, der die Lichtlaufzeitmessung startet oder aus dem in der Auswertung ein Startzeitpunkt bestimmt wird. Das Referenzsignal kann dynamische Driften korrigieren, da sie Messsignal und Referenzsignal gleichermaßen betreffen. Ein konstanter Versatz, wie beispielsweise ein optischer Laufweg des Referenzlichtbündels, ist bei einer Lichtlaufzeitmessung unproblematisch und durch Kalibrierung oder rechnerische Kompensation ausgleichbar. Bei einem ortsaufgelösten Referenzlichtempfänger kann jeweils pro Ablenkwinkel das Referenzsignal des passenden Referenzlichtempfangselements verwendet werden. Alternativ ist denkbar, ein Summensignal oder dergleichen zu bilden.

Besonders bevorzugt ist ein zweiter Referenzlichtempfänger vorgesehen, dessen Referenzsignal für die Lichtlaufzeitkorrektur verwendet wird. Dafür genügt ein einfacher Lichtempfänger ohne Ortsauflösung, etwa eine Photodiode, denn für die Messung des Ablenkwinkels bleibt der andere, ursprüngliche Referenzlichtempfänger zuständig. Ein zweiter Referenzlichtempfänger ist besonders vorteilhaft im Zusammenhang mit den oben beschriebenen Ausführungsformen, in denen das Referenzauskopplungselement durch Keilform und/oder Strukturierung mit seinen beiden Grenzflächen jeweils zwei voneinander getrennte Referenzlichtbündel erzeugt. Dann kann der Referenzlichtempfänger zum Messen des Ablenkwinkels in dem einen Referenzlichtbündel und der zweite Referenzlichtempfänger für die Lichtlaufzeitkorrektur in dem anderen Referenzlichtbündel angeordnet werden. Eine andere Möglichkeit wäre, das Referenzlichtbündel ausreichend aufzuweiten, vorzugsweise nur in einer Höhenrichtung, damit es beide Referenzlichtempfänger trifft.

Der Sensor weist bevorzugt einen Referenzlichtsender auf, um Lichtempfangselemente des Lichtempfängers, Referenzlichtempfangselemente des Referenzlichtempfängers und/oder einen zweiten Referenzlichtempfänger gleichzeitig zu beleuchten. Es wird damit eine Art Blitz vorzugsweise vollflächig auf die Lichtempfangselemente und/oder Referenzlichtempfangselemente gerichtet, um einen gemeinsamen Zeitnullpunkt zu finden. So lassen sich unterschiedliche Verzögerungen in den verschiedenen Empfangskanälen kompensieren. Das ist vor allem bei Verwendung eines einfachen, nicht ortsaufgelösten zweiten Referenzlichtempfängers von Vorteil. Denn sofern die Laufzeitverzögerung einzeln mit den Referenzlichtempfangselementen eines ortsaufgelösten Referenzlichtempfängers korrigiert wird, sind die individuellen Driften der Empfangskanäle schon berücksichtigt, ein noch verbleibender konstanter Versatz kann durch Kalibration kompensiert werden. In einer weiteren Ausführungsform ist denkbar, dass der eigentliche Lichtsender die Funktion des Referenzlichtsenders mit übernimmt.

Die Steuer- und Auswertungseinheit ist bevorzugt dafür ausgebildet, anhand des Referenzsignals die Funktionsfähigkeit der Ablenkeinheit und/oder des Lichtsenders und/oder eine Verschmutzung einer Frontscheibe zu prüfen. Neben der Bestimmung oder Überprüfung des Ablenkwinkels, oder auf dieser Basis, werden so verschiedene Funktionen der Lichtsenderüberwachung, der Überwachung der Ablenkeinheit, des Laserschutzes und der Referenzierung ermöglicht beziehungsweise kombiniert. Im Einzelnen ist feststellbar, ob noch eine Abtastbewegung stattfindet, ob sie die richtige Scanfrequenz aufweist und ob die richtigen Ablenkwinkel angesteuert werden. Anhand einer Erwartungshaltung, beispielsweise aus einem anfänglichen Einlernen, ist mit mindestens einer Schwelle prüfbar, ob die Ausgangsleistung des Lichtsenders noch in einem Toleranzbereich liegt, der Lichtsender auszufallen droht oder womöglich schon ausgefallen ist. Abweichungen werden beispielsweise durch Alterung oder Fehlansteuerungen des Lichtsenders beziehungsweise Alterung und Verschmutzung insbesondere von optischem Referenzelement und Frontscheibe verursacht. Das Referenzsignal kann dabei durchaus unerwünscht stark und nicht nur geschwächt werden, wie etwa im Falle eines stärkeren Frontscheibenreflexes bei deren Verschmutzung. Erforderlichenfalls kann aus Gründen der Augensicherheit der Lichtsender ausgeschaltet beziehungsweise die Fehlfunktion gemeldet werden. Die Messung einer Verschmutzung der Frontscheibe ist in sich eine nützliche Funktion, beispielsweise indem eine entsprechende Wartungsanforderung ausgegeben oder in sicherheitstechnischer Anwendung bei zu starker Verschmutzung vorsorglich eine sicherheitsgerichtete Reaktion ausgelöst wird. Erkennbar ist auch eine Veränderung des Querschnitts des Sendelichtbündels und damit der Spotgeometrie, was sich beispielsweise in dem Erscheinen dominanter Nebenkeulen äußern kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit Sendestrahlablenkung;
- Fig. 2: eine Darstellung eines beispielhaften Strahlverlaufs von Referenzlichtbündeln auf einen Referenzlichtempfänger;
- Fig. 3: eine Darstellung entsprechend Figur 2 aus einer seitlichen Perspektive;
- Fig. 4: eine vergrößerte Darstellung entsprechend Figur 2 aus einer vorderen Perspektive;
- Fig. 5: eine Draufsicht entsprechend Figur 2;
- Fig. 6: ein beispielhaftes Intensitätsprofil der von den Referenzlichtbündeln auf dem Referenzlichtempfänger erzeugten Lichtspots;
- Fig. 7: eine Darstellung eines beispielhaften Strahlverlaufs von nun jeweils zwei Referenzlichtbündeln durch Auskopplung an zwei keilförmig angeordneten Grenzflächen mit einem zusätzlichen zweiten Referenzlichtempfänger;
- Fig. 8: eine Darstellung entsprechend Figur 7 mit stärker den Strahlen folgender Perspektive;
- Fig. 9: eine Darstellung entsprechend Figur 7 aus einer Perspektive zwischen seitlicher und äußerer Ansicht von vorne; und
- Fig. 10: ein beispielhaftes Intensitätsprofil eines von den Referenzlichtbündeln auf dem zweiten Referenzlichtempfänger erzeugten Lichtspots.

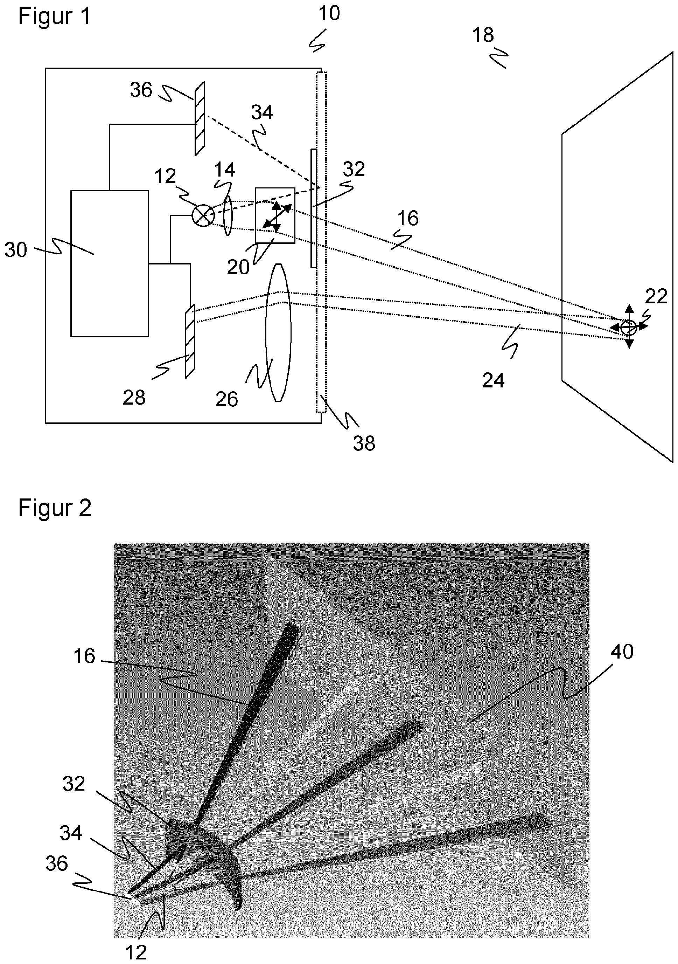

Figur 1 zeigt einen optoelektronischen Sensor 10 oder Solid-State-Scanner. Die Darstellung ist rein schematisch, einen realistischeren Eindruck beispielhafter gegenseitiger Anordnungen der optischen Elemente und Strahlengänge vermitteln die weiteren Figuren. Mit einem Lichtsender 12, der vorzugsweise eine lichtstarke LED oder Laserlichtquelle aufweist, wird durch eine Sendeoptik 14 ein Sendelichtstrahl 16 in einen Erfassungsbereich 18 ausgesandt. Mit Hilfe einer Ablenkeinheit 20 kann der Ablenkwinkel des Sendelichtstrahls 16 verändert und der Sendelichtstrahl 16 somit auf einen gewünschten variablen Messpunkt 22 ausgerichtet werden. Mit entsprechenden Abtastmustern wird dadurch nacheinander ein zeilenförmiger oder flächiger Erfassungsbereich 18 abgetastet, wobei ein nahezu beliebiges Abtastmuster denkbar ist.

Die Ablenkeinheit 20 ist nur schematisch dargestellt. Es gibt dafür verschiedenste Umsetzungsmöglichkeiten, nicht abschließende Beispiele sind ein MEMS-Spiegel, ein schaltbares Flüssigkristallelement, ein Optical Phased Array (OPA), das ähnlich wie in der Radartechnik durch Überlagerung vieler Einzelsender die Strahlkeule am Ausgang verschwenken kann, ein akusto-optischer Modulator, ein elektro-optische Modulator, eine Flüssiglinse, in der die Grenzschicht zwischen zwei nicht mischbaren Medien durch Ansteuerung einer Elektrodenanordnung verkippt werden kann, oder eine Piezo-Aktorik, die eine laterale Position der Sendeoptik 14 beziehungsweise, da es auf die relative Lage dazwischen ankommt, des Lichtsenders 12 verändert. In einer weiteren Ausführungsform wird als Lichtsender 12 eine Zeile oder Matrix mit einer Vielzahl von einzeln oder gruppenweise ansteuerbaren Einzellichtsendern verwendet, beispielsweise ein VCSEL-Array oder eine Anordnung mit anderen Lichtquellen, wie LEDs oder Kantenemitter-Laserdioden. Ein Sendelichtstrahl 16 in einem bestimmten Ablenkwinkel wird dann durch gezieltes Aktivieren bestimmter Einzellichtsender erzeugt. Jedenfalls kommt die Ablenkeinheit 20 in einem Solid-State-Scanner ohne makroskopische bewegliche Teile aus. Eine Mechanik mit bewegten Teilen etwa in Form eines Drehspiegels oder eines beweglichen Messkopfes ist alternativ vorstellbar.

Treffen die Sendelichtstrahlen 16 nun in dem Erfassungsbereich 18 auf Objekte, so werden sie als remittierte Sendelichtstrahlen 24 zu dem Sensor 10 zurückgeworfen. Die remittierten Sendelichtstrahlen 24 gelangen durch eine Empfangsoptik 26 auf einen Lichtempfänger 28. Die Empfangsoptik 26 ist wie schon die Sendeoptik 14 nur durch eine einfache Linse repräsentiert, die stellvertretend für beliebige Optiken mit mehrlinsigen Objektiven, Blenden und sonstige optische Elemente steht. Auch eine reflexive oder diffraktive Optik ist vorstellbar. Auch der optische Grundaufbau mit biaxial nebeneinanderliegendem Lichtsender 12 und Lichtempfänger 28 ist nicht zwingend und durch jede an sich von einstrahligen optoelektronischen Sensoren bekannte Bauform ersetzbar. Ein Beispiel dafür ist eine koaxiale Anordnung mit oder ohne Strahlteiler.

Der Lichtempfänger 28 weist eine Vielzahl von Lichtempfangselementen auf und ist vorzugsweise als SPAD-Array ausgebildet. SPADs sind hochempfindlich und hochintegrierbar, und sie bieten die Möglichkeit, durch Absenken der Vorspannung unter die Durchbruchspannung praktisch inaktiv zu werden. Dadurch können jeweils nur solche SPADs aktiv geschaltet werden, die dem gewünschten Messpunkt 22 und damit dem erwarteten Auftreffort der remittierten Sendelichtstrahlen 24 entsprechen. Das kann jeweils ein einzelnes Pixel oder eine Gruppe von Pixeln sein, die gemeinsam die remittierten Sendelichtstrahlen 24 registrieren. Alternativ zu einem SPAD-Array ist eine Mehrfachanordnung von Photodioden oder APDs oder ein anderer Zeilen- oder Matrixempfänger beispielsweise in CCD- oder CMOS-Technik denkbar, bei dem dann gegebenenfalls nur bestimmte Pixel oder Pixelgruppen entsprechend gewünschten Messpunkten ausgelesen werden.

Auf eine empfangsseitige Strahlablenkung kann bei Verwendung eines ortsaufgelösten Lichtempfängers 28 mit einer Vielzahl von Pixeln oder Lichtempfangselementen verzichtet werden. Der Lichtempfänger 28 deckt den vollständigen Winkelbereich des gewünschten Sichtfeldes ab, aber jede Einzelmessung beschränkt sich vorteilhaft auf den Messpunkt 22 mit hoher Lichtleistung und geringem Fremdlichteintrag. Alternativ ist eine empfangsseitige Ablenkung analog der Ablenkeinheit 20 oder sogar unter Verwendung derselben Ablenkeinheit 20 möglich.

Eine Steuer- und Auswertungseinheit 30 ist mit dem Lichtsender 12 und dem Lichtempfänger 28 verbunden. Damit wird die Ablenkeinheit 20 angesteuert, um jeweils den Sendelichtstrahl 16 auf den gewünschten Messpunkt 22 zu richten. Die Empfangssignale vorzugsweise nur der tatsächlich von dem remittierten Sendelichtstrahl 24 beleuchteten Lichtempfangselemente oder SPADs werden ausgewertet, um eine Lichtlaufzeit zu dem Messpunkt 22 des jeweils angetasteten Objekts in dem Erfassungsbereich 18 und daraus deren Abstand zu bestimmen. Es wird vorzugsweise mit einem pulsbasierten Verfahren gemessen (dToF, direct Time-of-Flight), aber eine Pulsmittelung mit mehreren nacheinander ausgesandten Einzelpulsen und statistischer gemeinsamer Auswertung beispielsweise nach Akkumulation in einem Histogramm oder ein Phasenverfahren (iToF, indirect Time-of-Flight) ist ebenso denkbar. Zumindest Teile der Steuer- und Auswertungseinheit 30 können mit dem Lichtsender 12 beziehungsweise dem Lichtempfänger 28 auf einem gemeinsamen Baustein integriert werden, etwa eine Mustererzeugung für die Abfolge der Ablenkung oder pixelbezogene Auswertungen beziehungsweise Vorverarbeitungsschritte.

Zusätzlich zu dem eigentlichen Messpfad mit dem Messsignal aus dem remittierten Sendelichtstrahl 24 wird in dem Sensor 10 ein Referenzpfad zur Erzeugung eines Referenzsignals aufgespannt. Ein Referenzauskopplungselement 32 leitet einen Teil des Sendelichtstrahls 16 als Referenzlichtstrahl 34 auf einen Referenzlichtempfänger 36 um. Das Referenzauskopplungselement 32 ist hier beispielhaft an einer Frontscheibe 38 des Sensors 10 angeordnet, durch den der Sendelichtstrahl 16 aus- und der remittierte Sendelichtstrahl 24 eintritt. Das Referenzauskopplungselement 32 kann alternativ innen im Sendestrahlengang oder außen an der Frontscheibe 38 angeordnet werden. Vorzugsweise ist es in die Frontscheibe 38 integriert, beziehungsweise die Frontscheibe 38 hat eine zusätzliche Funktion als Referenzauskopplungselement 32. Mögliche Anordnungen und Ausgestaltungen des Referenzauskopplungselements 32 und der entsprechenden Strahlwege werden später unter Bezugnahme auf die Figuren 2-10 genauer erläutert.

Der Referenzlichtempfänger 36 weist in dieser Ausführungsform eine Vielzahl von Referenzpixeln oder Referenzlichtempfangselementen und somit eine Ortsauflösung auf. Für die möglichen Ausgestaltungen des Referenzlichtempfängers 36 gelten sinngemäß die Bemerkungen zu dem Lichtempfänger 28. Die Figur 1 zeigt eine Ausführungsform, in denen Lichtempfänger 28 und Referenzlichtempfänger 36 eine Zeilenanordnung bilden. Das entspricht einem als Zeilenscanner ausgebildeten Sensor 10 mit Ablenkwinkeln, die nur in einem als Azimut bezeichneten Freiheitsgrad variieren, so dass eine Ebene oder ein Ausschnitt einer Ebene abgetastet wird. Alternativ ist jeweils eine Matrixanordnung mit einem zusätzlichen Freiheitsgrad der Ablenkeinheit 20 in Elevation für eine 3D-Abtastung möglich. Der Referenzlichtempfänger 36 kann auch als PSD (Position Sensitive Device) ausgestaltet sein, was sich für den Lichtempfänger 28 wegen des erhöhten Fremdlichteintrags weniger anbietet.

Wenn der Sendelichtstrahl 16 durch Variation des Ablenkwinkels über den Erfassungsbereich 18 geführt wird, streicht der Referenzlichtstrahl 34 entsprechend über den Referenzlichtempfänger 36. Aus der Position beziehungsweise Identität des jeweils getroffenen Referenzlichtempfangselements kann daher auf den Ablenkwinkel rückgeschlossen werden. Somit ist die Steuer- und Auswertungseinheit 30 in der Lage, den Ablenkwinkel anhand des Referenzsignals zu messen oder zu überprüfen. Das eröffnet eine Reihe von Möglichkeiten. Die Steuer- und Auswertungseinheit 30 kann damit die Scanbewegung regeln, also Abweichungen zwischen angesteuertem und tatsächlich erreichtem Ablenkwinkel korrigieren. Alternativ werden Messwerte dem tatsächlichen Ablenkwinkel zugeordnet und dadurch genauer. Es ist erkennbar, wenn eine eingestellte Scanfrequenz nicht eingehalten wird, d.h. eine Zyklusdauer einer jeweiligen Abtastung mit dem gewünschten Abtastmuster, oder wenn die Ablenkeinheit 20 fehlerhaft arbeitet. Insbesondere kann der Lichtsender 12 aus Gründen des Laser- beziehungsweise Augenschutzes rechtzeitig ausgeschaltet werden, wenn der Sendelichtstrahl 16 in einem festen Ablenkwinkel verharrt.

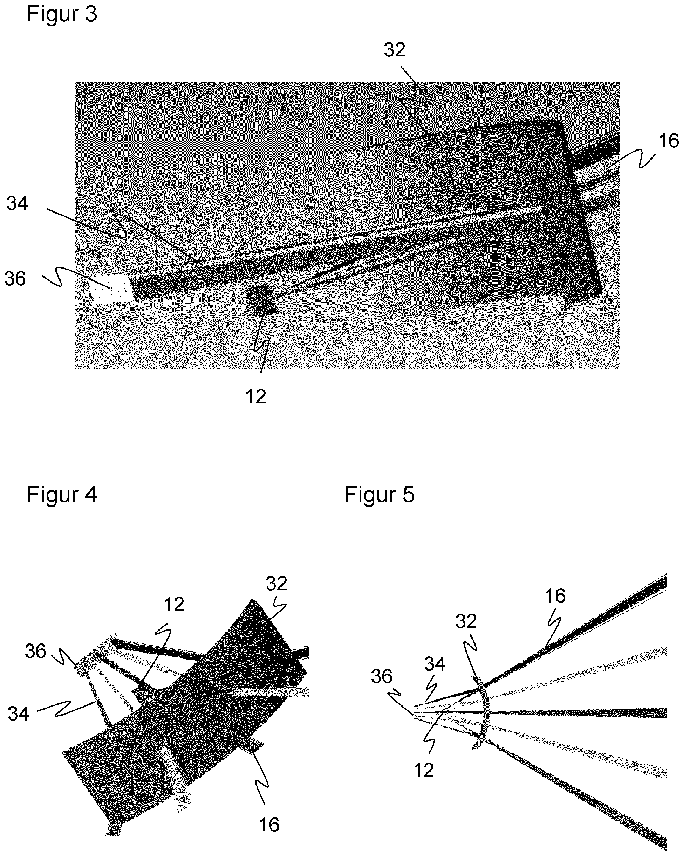

Figur 2 zeigt den Strahlengang der Sendelichtstrahlen 16 und der Referenzlichtstrahlen 34 in einer Ausführungsform des Sensors 10. Die Figuren 3 bis 5 zeigen dies nochmals in einer Seitenansicht, Vorderansicht und Draufsicht. Das Referenzauskopplungselement 32 ist hier als eigenes Bauteil dargestellt. Das ist eine mögliche Ausführungsform, vorzugsweise handelt es sich aber bei dem dargestellten Referenzauskopplungselement 32 um die Frontscheibe 38, die zusätzlich als das Referenzauskopplungselement 32 fungiert. Mit anderen Worten wird dann der durch die Formgebung der Frontscheibe 38 in gezielte Richtungen erzeugte Frontscheibenreflex als Referenzlichtstrahl 34 genutzt.

Es sind der Übersichtlichkeit halber nur fünf Strahlen in fünf Ablenkwinkeln gezeigt. In der Praxis würde der Erfassungsbereich 18 und ein darin befindliches Objekt 40 sehr viel dichter mit zahlreichen Ablenkwinkeln abgetastet, wobei diese Ortsauflösung mit der Pixelzahl des Lichtempfängers 28 korrespondiert. Die Messung des Ablenkwinkels leistet das Referenzlichtempfangselement 36 mit seiner Ortsauflösung. Verfahren mit Subpixelauflösung durch teilweise getroffene benachbarte Pixel sind denkbar.

Das Referenzauskopplungselement 32 weist eine Krümmung auf, mit der ein Teil des Sendelichtstrahls 16 jeweils auf eine dem Ablenkwinkel entsprechende Position des Referenzlichtempfängers 36 reflektiert wird. Diese Krümmung kann durch eine konische Komponente, eine asphärische Form oder eine Freiform vorgegeben sein. Das Referenzauskopplungselement 32 ist zudem in einer Richtung senkrecht zu der Krümmung, also einer Höhen-oder Elevationsrichtung, leicht geneigt, damit die Referenzlichtstrahlen 34 in die Ebene des Referenzlichtempfängers 36 geführt werden.

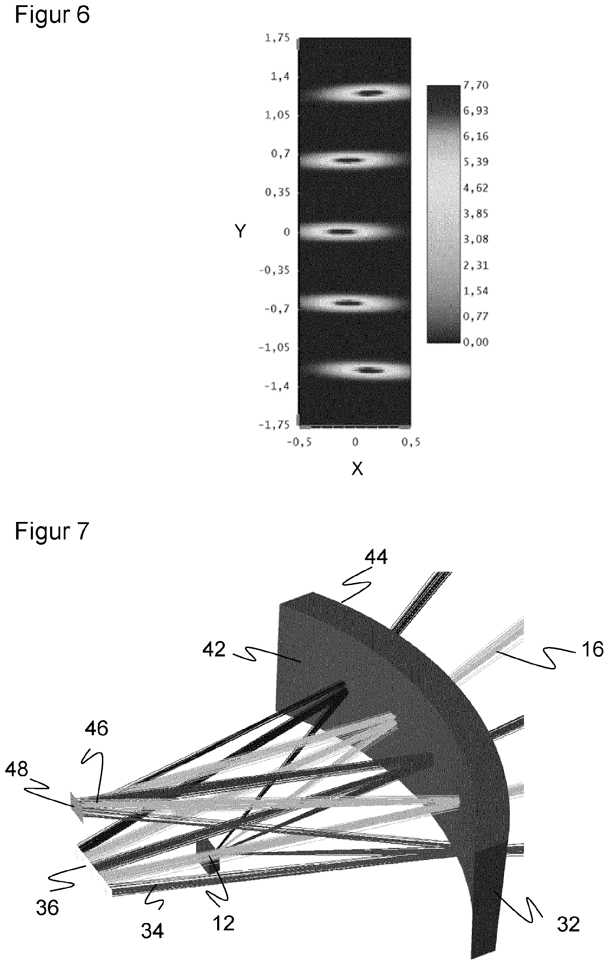

Figur 6 zeigt beispielhafte Intensitätsprofile der Lichtflecken, die von den Referenzlichtstrahlen 34 auf dem Referenzlichtempfänger 36 erzeugt werden. Die Y-Achse entspricht dem Ablenkwinkel, die X-Achse einer Höhenausdehnung des Querschnitts der Referenzlichtstrahlen 34. Die Lichtflecken sind gleichzeitig dargestellt, bei einer tatsächlichen Abtastung werden sie nacheinander erzeugt. Die elongierte Form der Lichtflecken ist für eine hohe Auflösung in Richtung des Ablenkwinkels erwünscht und wird beispielsweise mit der Sendeoptik 14 erzielt.

Die Beziehung zwischen Ablenkwinkel und Spotlage auf dem Referenzlichtempfänger 36 ist deutlich ablesbar. Somit kann die Steuer- und Auswertungseinheit 30 aus dem Referenzsignal, insbesondere aus der Position, an der der Referenzlichtstrahl 34 auf den Referenzlichtempfänger 36 fällt, den Ablenkwinkel bestimmen oder überprüfen.

Die in den Figuren 2 bis 6 gezeigte Ausführungsform entspricht wiederum einem als Zeilenscanner ausgebildeten Sensor 10. Die Formeigenschaften des Referenzauskopplungselements 32 in Höhen- oder Elevationsrichtung senkrecht zu der somit nur im Azimut abgetasteten Ebene sind dann weitgehend frei. Die Höhenkontur kann flach oder ebenfalls konisch, asphärisch oder sogar eine Freiform sein. Damit ist der auf dem Referenzlichtempfänger 36 erzeugte Lichtfleck in X-Richtung formbar.

In einer alternativen Ausführungsform findet eine 3D-Abtastung sowohl im Azimut als auch in Elevation statt. Der Lichtempfänger 28 und vorzugsweise auch der Referenzlichtempfänger 36 weisen dann eine Ortsauflösung auch für diesen zweiten Freiheitsgrad der Ablenkung auf. Das Referenzauskopplungselement 32 sollte nun nicht mehr flach bleiben, sondern durch eine Krümmung dafür sorgen, dass die Referenzlichtstrahlen 34 auch in Elevationsrichtung auf Positionen des Referenzlichtempfängers 36 fallen, aus denen der Elevationswinkel rekonstruierbar ist. In Figur 6 entspricht dies der X-Position, die dann zusätzlich zur Y-Position für eine zweidimensionale Bestimmung des Ablenkwinkels verwendet werden kann.

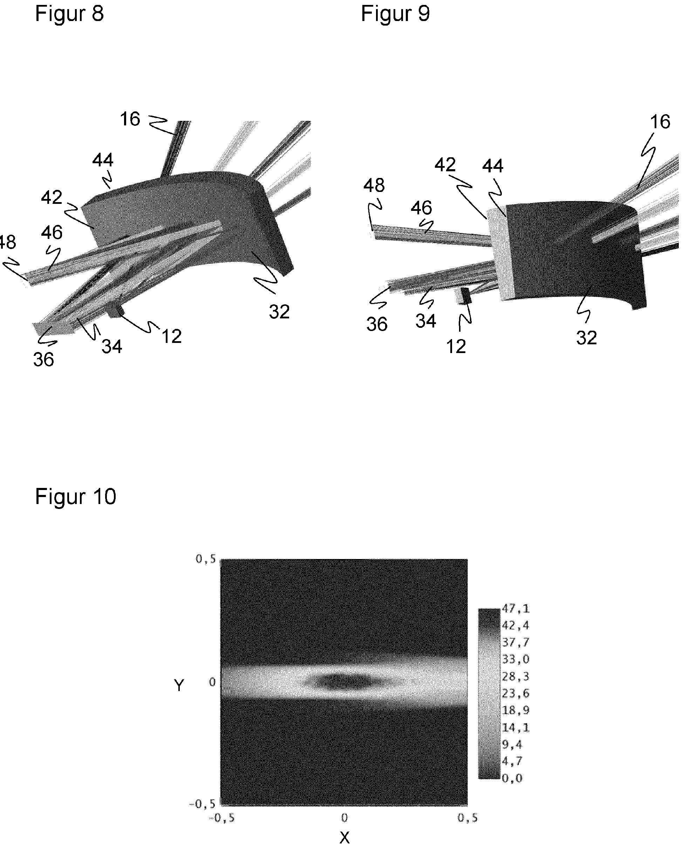

Figur 7 zeigt den Strahlengang an einem Referenzauskopplungselement 32 in einer weiteren Ausführungsform des Sensors 10. Die Figuren 8 und 9 zeigen dies nochmals aus einer Perspektive, die eher dem Strahlengang folgt, beziehungsweise in einer Ansicht von schräg vorne. In dieser Ausführungsform sind die innere Grenzfläche 42 und die äußere Grenzfläche 44 des Referenzauskopplungselements 32 unterschiedlich geformt. Ziel ist, den Reflex des Sendelichtstrahls 16 an der inneren Grenzfläche 42 von demjenigen an der äußeren Grenzfläche 44 geometrisch zu trennen. An der inneren Grenzfläche 42 wird der bisher betrachtete Referenzlichtstrahl 34, an der äußeren Grenzfläche 44 ein zusätzlicher Referenzlichtstrahl 46 erzeugt. Das wäre alternativ umgekehrt möglich, dann wird der Reflex an der äußeren Grenzfläche 44 auf den Referenzlichtempfänger 36 geleitet beziehungsweise der Referenzlichtempfänger 36 entsprechend angeordnet.

Um dies zu erreichen, stehen die innere Grenzfläche 42 und die äußere Grenzfläche 44 in Höhen- oder Elevationsrichtung in einem Winkel zueinander. Das Referenzauskopplungselement 32 erhält dadurch eine Keilform. Aufgrund der unterschiedlichen Neigungen fällt der Referenzlichtstrahl 34 in eine andere Ebene als der zusätzlicher Referenzlichtstrahl 46. Anstelle der gezeigten Keilform oder in deren Ergänzung ist eine diffraktive Struktur, eine Nanostrukturierung oder dergleichen an mindestens einer der Grenzflächen 42,44 denkbar, um den Referenzlichtstrahl 34 und den zusätzlichen Referenzlichtstrahl 46 in unterschiedliche Ebenen zu lenken.

Eine sehr einfache Möglichkeit, den zusätzlichen Referenzlichtstrahl 46 zu behandeln, besteht darin, ihn einfach wegzuspiegeln, vorzugsweise in eine Lichtfalle. Damit ist dann lediglich erreicht, dass der an der inneren Grenzfläche 42 entstehende Referenzlichtstrahl 34 nicht gestört wird.

Vorteilhafterweise wird in dem Strahlengang des zusätzlichen Referenzlichtstrahls 46 ein zweiter Referenzlichtempfänger 48 angeordnet. Der zweite Referenzlichtempfänger 48 muss nicht ortsauflösend sein und ist beispielsweise eine einfache Photodiode. Die unterschiedlichen Geometrien von innerer Grenzfläche 42 und äußerer Grenzfläche 44 ermöglichen eine unterschiedliche Bündelung. Während auf dem Referenzlichtempfänger 36 eine Ortsinformation erfasst werden soll, kann für den zweiten Referenzlichtempfänger 48 eine Krümmung gewählt werden, die den zusätzlichen Referenzlichtstrahl 46 auf den zweiten Referenzlichtempfänger 48 fokussiert. Somit liegt der zweite Referenzlichtempfänger 48 vorzugsweise in der Fokuslage der zusätzlichen Referenzlichtstrahlen 46 sämtlicher Ablenkwinkel.

Mit dem Referenzsignal des zweiten Referenzlichtempfängers 48 kann die Leistung des Lichtsenders 12 überwacht und/oder eine Korrektur der Lichtlaufzeit vorgenommen werden. Beide Funktionen könnte auch der Referenzlichtempfänger 36 leisten, sogar eine auf den jeweiligen Empfangskanal beziehungsweise Ablenkwinkel bezogene Referenzierung. Der Vorteil des zusätzlichen Referenzlichtempfängers 48 ist, dass dessen Referenzsignal für alle Ablenkwinkel oder Sendekanäle in gleicher Weise verwendet werden kann.

Mit einer Korrektur der Lichtlaufzeit oder optischen Referenzmessung gleicht die Steuerund Auswertungseinheit 30 verschiedene optische und elektronische Laufzeitverzögerungen aus, die sonst die Messung verfälschen können. Mögliche Ursachen sind Temperatureffekte und sonstige Umwelteinflüsse sowie Bauteilschwankungen, die sich während des Betriebes ändern können. Zur Kompensation bestimmt beispielsweise die Steuer- und Auswertungseinheit 30 aus dem Referenzsignal einen Startzeitpunkt der Lichtlaufzeitmessung, korrigiert die Lichtlaufzeit oder startet mit dem Referenzsignal die Zeitmessung etwa mittels Time-to-Digital-Convertern (TDCs). Soweit die Referenzmessung den gleichen Driften unterliegt wie die eigentliche Messung, und das ist durch geeignete Auslegung des Referenzpfads jedenfalls weitestgehend erreichbar, sind die Auswirkungen solcher Driften damit kompensierbar.

In einer weiteren Ausführungsform kann ergänzend in der Nähe des Referenzlichtempfängers 36 oder des zweiten Referenzlichtempfängers 48 eine zusätzliche Lichtquelle angeordnet werden. Die Steuer- und Auswertungseinheit 30 sendet damit in einer Messpause einen Synchronisationspuls, der von den Lichtempfangselementen des Lichtempfängers 28 gleichzeitig empfangen wird. Hierüber lassen sich zusätzlich Laufzeitunterschiede zwischen den einzelnen Empfangskanälen kompensieren. Vorzugsweise trifft der Synchronisationspuls auch den Referenzlichtempfänger 36 und/oder den zweiten Referenzlichtempfänger 48, um auch dort die Verzögerung zu kennen und gegebenenfalls zu kompensieren.

Figur 10 zeigt ein beispielhaftes Intensitätsprofil der Lichtflecken, die von den zusätzlichen Referenzlichtstrahlen 46 auf dem zweiten Referenzlichtempfänger 48 erzeugt werden. Wie schon in Figur 6 sind die Lichtflecken, die eigentlich nacheinander erzeugt werden, simultan überlagert dargestellt. Wegen der Fokussierung durch die äußere Grenzfläche 44 entsteht dennoch nur ein Lichtfleck.

Die geometrische Auftrennung in zwei Scharen von Referenzlichtstrahlen 34, 46 wurde wiederum an einem Ausführungsbeispiel eines als Zeilenscanner ausgebildeten Sensors 10 erläutert, und erneut ist eine 3D-Variante vorstellbar, wobei auf die entsprechenden Erläuterungen zu der Ausführungsform verwiesen wird, die unter Bezugnahme auf die Figuren vorgestellt wurde. Innere Grenzfläche 42 und äußere Grenzfläche 44 können in Höhenrichtung auf die verschiedenen beschriebenen Arten gekrümmt werden, und dies auch untereinander verschieden.

Die Frontscheibe 38, die vorzugsweise als das Referenzauskopplungselement 32 fungiert, kann zur Reduktion von Streulicht mit einer Antireflexbeschichtung versehen werden. Die Restreflexion ist selbst bei einer guten Antireflexbeschichtung noch hoch genug, um auswertbare Referenzsignale zu erzeugen.

Durch die Messung des Ablenkwinkels aus dem Referenzsignal werden eine ganze Reihe von Herausforderungen gelöst. In einem Laserscanner mit mechanisch bewegten Teilen ist dies eine Alternativlösung zu dem bekannten Encoder beziehungsweise Referenzziel in der hinteren Totzone. In einem Solid-State-Scanner werden solche Lösungen überhaupt erst ermöglicht. Zu den möglichen Funktionen zählt die Korrektur der Lichtlaufzeitmessung, eine Sendestrahlüberwachung im Hinblick auf Scanbewegung, Scanfrequenz und Laserschutz, eine Überwachung des Lichtsenders 12 und von dessen Sendeleistung, Alterung, Degradation und Vorausfall, d.h. drohendem Ausfall, eine Verschmutzungskontrolle, sowie eine Erkennung von Änderungen der Spotgeometrie insbesondere bei Erscheinen dominanter Nebenkeulen.

Die Messung des Ablenkwinkels kann für eine Überprüfung der Ablenkeinheit 20 und dafür genutzt werden, um sie nachzuregeln und bei bestehender Abweichung auf den gewünschten Ablenkwinkel auszurichten. Alternativ können die Messwerte in ihren Winkelkoordinaten nachgebessert werden.

Die Sendeleistung wird vorzugsweise anhand eines eingelernten oder parametrierte Referenzpegel überwacht. Dadurch wird erkannt, wenn der Lichtsender 12 altert, zu starke Temperatureffekte zeigt, statt in einem Pulsbetrieb im Dauerbetrieb arbeitet und dergleichen. Auf diesem Wege wird auch bei Bedarf eine sogar lokalisierbare Verschmutzung der Frontscheibe 38 erkannt, die den Pegel des Referenzsignals durch stärkere Auskopplung erhöhen würde. Eine Erhöhung in allen Referenzkanälen deutet auf homogene Verschmutzung oder einen Fehler des Lichtsenders 12 hin. Durch Vergleich des Referenzsignals mit einem erwarteten Referenzsignal lässt sich weiterhin erkennen, ob die Ablenkeinheit 20 fehlerfrei funktioniert. Bleibt das erwartete Referenzsignal aus, so strahlt der Lichtsender 12 in den falschen Ablenkwinkel, was nicht nur die Messung verhindert, sondern auch aus Gründen des Augenschutzes kritisch ist. Womöglich ist statt der Ablenkeinheit 20 der Lichtsender 12 ausgefallen, insbesondere, wenn von dem Referenzlichtempfänger 36 beziehungsweise dem zweiten Referenzlichtempfänger 48 überhaupt kein Referenzsignal erfasst wird. Der Sensor 10 ist jedenfalls so nicht einsatzfähig. Eine einfachere Überprüfung kommt ohne eingelernte Erwartungen an das Referenzsignal aus und stellt lediglich fest, ob überhaupt ein Referenzsignal entsteht, ohne dies mit einer Erwartungshaltung abzugleichen.

Als weitere Funktion kann die gesamte Kette der Lichtlaufzeitmessung getestet werden, indem für das Referenzsignal eine Lichtlaufzeitberechnung durchgeführt und das Ergebnis mit einer Erwartung verglichen wird. Diese ist dann nicht um Driften bereinigt, testet aber den Messkanal und deckt mögliche Fehler auf. Dadurch wird ein Funktionsausfall erkannt, was insbesondere in sicherheitstechnischer Anwendung zur Erreichung eines höheren Sicherheitsniveaus erforderlich ist.

## Patentansprüche

1. Optoelektronischer Sensor (10) zur Erfassung von Objekten (40) in einem Erfassungsbereich (18), der einen Lichtsender (12) zum Aussenden eines Sendelichtbündels (16), eine Ablenkeinheit (20) zum Ablenken des Sendelichtbündels (16) in verschiedene Ablenkwinkel zur Abtastung des Erfassungsbereichs (18), einen Lichtempfänger (28) zum Erzeugen eines Messsignals aus dem von den Objekten (40) remittierten Sendelichtbündel (24) und einen Referenzlichtempfänger (36) zum Erzeugen eines Referenzsignals aus einem intern in dem Sensor (10) von dem Sendelichtbündel (16) abgeleiteten Referenzlichtbündel (34) sowie eine Steuer- und Auswertungseinheit (30) aufweist, die dafür ausgebildet ist, das Messsignal auszuwerten, um eine Eigenschaft des Objekt (40) zu erfassen, insbesondere dessen Abstand aus einer Lichtlaufzeit des ausgesandten und wieder empfangenen Sendelichtbündels (16, 24) zu bestimmen, **dadurch gekennzeichnet,**
**dass** die Steuer- und Auswertungseinheit (30) weiterhin dafür ausgebildet ist, aus dem Referenzsignal den Ablenkwinkel zu bestimmen oder zu überprüfen.

2. Sensor (10) nach Anspruch 1,
wobei der Lichtempfänger (28) eine Vielzahl von Lichtempfangselementen aufweist, insbesondere SPADs, die jeweils unterschiedlichen Ablenkwinkeln zugeordnet sind, wobei insbesondere die Steuer- und Auswertungseinheit (30) dafür ausgebildet ist, jeweils nur diejenigen Lichtempfangselemente zu aktivieren oder auszulesen, die dem jeweiligen aktuellen Ablenkwinkel entsprechen.

3. Sensor (10) nach Anspruch 1 oder 2,
wobei der Referenzlichtempfänger (36) eine Vielzahl von Referenzlichtempfangselementen aufweist, die jeweils unterschiedlichen Ablenkwinkeln zugeordnet sind.

4. Sensor (10) nach Anspruch 3,
wobei die Steuer- und Auswertungseinheit (30) dafür ausgebildet ist, den Ablenkwinkel aus dem Auftreffort des Referenzlichtbündels (34) auf dem Referenzlichtempfänger (36) zu bestimmen, insbesondere anhand des Referenzlichtempfangselementes, das ein Referenzsignal erzeugt.

5. Sensor (10) nach einem der vorhergehenden Ansprüche,
wobei die Steuer- und Auswertungseinheit (30) dafür ausgebildet ist, mit Hilfe der Ablenkeinheit (20) periodisch eine Zeile und/oder ein zweidimensionales Muster abzutasten.

6. Sensor (10) nach einem der vorhergehenden Ansprüche,
wobei die Ablenkung ohne Bewegung von mechanischen Teilen, allenfalls von mikromechanischen Teilen erfolgt, insbesondere die Ablenkeinheit (20) einen MEMS-Spiegel, ein schaltbares Flüssigkristallelement, ein Optical Phased Array, einen akusto-optischen Modulator, einen elektro-optischen Modulator oder eine kippbare Flüssiglinse aufweist.

7. Sensor (10) nach einem der vorhergehenden Ansprüche,
der zur Erzeugung des Referenzlichtbündels (34) ein optisches Referenzauskopplungselement (32) im Strahlengang des Sendelichtbündels (16) aufweist, das insbesondere an einer Frontscheibe (38) des Sensors (10) angeordnet oder in die Frontscheibe (38) integriert ist.

8. Sensor (10) nach Anspruch 7,
wobei das Referenzauskopplungselement (32) in einem Querschnitt eine gekrümmte Form aufweist.

9. Sensor (10) nach Anspruch 7 oder 8,
wobei das Referenzauskopplungselement (32) eine Vielzahl von Mikrospiegeln oder Mikroprismen aufweist.

10. Sensor (10) nach einem der Ansprüche 7 bis 9,
wobei das Referenzauskopplungselement (32) in einer Elevationsrichtung gegenüber dem Sendelichtbündel (16) geneigt angeordnet ist.

11. Sensor (10) nach einem der Ansprüche 7 bis 10,
wobei eine innere Grenzfläche (42) und eine äußere Grenzfläche (42) des Referenzauskopplungselements (32) zueinander geneigt sind und/oder wobei das Referenzauskopplungselement (32) eine Strukturierung mindestens einer Grenzfläche (42, 44) aufweist.

12. Sensor (10) nach einem der vorhergehenden Ansprüche,
wobei die Steuer- und Auswertungseinheit (30) dafür ausgebildet ist, die gemessene Lichtlaufzeit anhand des Referenzsignals zu korrigieren, insbesondere mit einem zweiten Referenzlichtempfänger (48).

13. Sensor (10) nach einem der vorhergehenden Ansprüche,
der einen Referenzlichtsender aufweist, um Lichtempfangselemente des Lichtempfängers (28), Referenzlichtempfangselemente des Referenzlichtempfängers (36) und/oder einen zweiten Referenzlichtempfänger (48) gleichzeitig zu beleuchten.

14. Sensor (10) nach einem der vorhergehenden Ansprüche,
wobei die Steuer- und Auswertungseinheit (30) dafür ausgebildet ist, anhand des Referenzsignals die Funktionsfähigkeit der Ablenkeinheit (20) und/oder des Lichtsenders (12) und/oder eine Verschmutzung einer Frontscheibe (38) zu prüfen.

15. Verfahren zur Erfassung von Objekten (40) in einem Erfassungsbereich (18), bei dem ein Sendelichtbündel (16) ausgesandt und zur Abtastung des Erfassungsbereichs (18) in verschiedene Ablenkwinkel abgelenkt wird, wobei ein Messsignal aus dem von den Objekten (40) remittierten Sendelichtbündel (24) und ein Referenzsignal aus einem von dem Sendelichtbündel (16) abgeleiteten Referenzlichtbündel (34) erzeugt werden und das Messsignal ausgewertet wird, um eine Eigenschaft des Objekt (40) zu erfassen, insbesondere dessen Abstand aus einer Lichtlaufzeit des ausgesandten und wieder empfangenen Sendelichtbündels (16, 24) zu bestimmen,
**dadurch gekennzeichnet,**
**dass** aus dem Referenzsignal der Ablenkwinkel bestimmt oder überprüft wird.

## Geänderte Patentansprüche

### Geänderte Patentansprüche gemäss Regel 137(2) EPÜ.

1. Optoelektronischer Sensor (10) zur Erfassung von Objekten (40) in einem Erfassungsbereich (18), der einen Lichtsender (12) zum Aussenden eines Sendelichtbündels (16), eine Ablenkeinheit (20) zum Ablenken des Sendelichtbündels (16) in verschiedene Ablenkwinkel zur Abtastung des Erfassungsbereichs (18), einen Lichtempfänger (28) zum Erzeugen eines Messsignals aus dem von den Objekten (40) remittierten Sendelichtbündel (24), ein optisches Referenzauskopplungselement (32) im Strahlengang des Sendelichtbündels (16) zur Erzeugung eines Referenzlichtbündels (34) und einen Referenzlichtempfänger (36) mit einer Vielzahl von Referenzlichtempfangselementen, die jeweils unterschiedlichen Ablenkwinkeln zugeordnet sind, zum Erzeugen eines Referenzsignals aus dem Referenzlichtbündel (34) sowie eine Steuer- und Auswertungseinheit (30) aufweist, die dafür ausgebildet ist, das Messsignal auszuwerten, um eine Eigenschaft des Objekt (40) zu erfassen, insbesondere dessen Abstand aus einer Lichtlaufzeit des ausgesandten und wieder empfangenen Sendelichtbündels (16, 24) zu bestimmen, und aus dem Referenzsignal den Ablenkwinkel zu bestimmen oder zu überprüfen,
**dadurch gekennzeichnet,**
**dass** das Referenzauskopplungselement (32) in einer Elevationsrichtung gegenüber dem Sendelichtbündel (16) geneigt angeordnet ist.

2. Sensor (10) nach Anspruch 1,
wobei der Lichtempfänger (28) eine Vielzahl von Lichtempfangselementen aufweist, insbesondere SPADs, die jeweils unterschiedlichen Ablenkwinkeln zugeordnet sind, wobei insbesondere die Steuer- und Auswertungseinheit (30) dafür ausgebildet ist, jeweils nur diejenigen Lichtempfangselemente zu aktivieren oder auszulesen, die dem jeweiligen aktuellen Ablenkwinkel entsprechen.

3. Sensor (10) nach Anspruch 1 oder 2,
wobei die Steuer- und Auswertungseinheit (30) dafür ausgebildet ist, den Ablenkwinkel aus dem Auftreffort des Referenzlichtbündels (34) auf dem Referenzlichtempfänger (36) zu bestimmen, insbesondere anhand des Referenzlichtempfangselementes, das ein Referenzsignal erzeugt.

4. Sensor (10) nach einem der vorhergehenden Ansprüche,
wobei die Steuer- und Auswertungseinheit (30) dafür ausgebildet ist, mit Hilfe der Ablenkeinheit (20) periodisch eine Zeile und/oder ein zweidimensionales Muster abzutasten.

5. Sensor (10) nach einem der vorhergehenden Ansprüche,
wobei die Ablenkung ohne Bewegung von mechanischen Teilen oder mit Bewegung von mikromechanischen Teilen erfolgt, insbesondere die Ablenkeinheit (20) einen MEMS-Spiegel, ein schaltbares Flüssigkristallelement, ein Optical Phased Array, einen akusto-optischen Modulator, einen elektro-optischen Modulator oder eine kippbare Flüssiglinse aufweist.

6. Sensor (10) nach einem der vorhergehenden Ansprüche,
wobei das Referenzauskopplungselement (32) an einer Frontscheibe (38) des Sensors (10) angeordnet oder in die Frontscheibe (38) integriert ist.

7. Sensor (10) nach einem der vorhergehenden Ansprüche,
wobei das Referenzauskopplungselement (32) in einem Querschnitt eine gekrümmte Form aufweist.

8. Sensor (10) nach einem der vorhergehenden Ansprüche,
wobei das Referenzauskopplungselement (32) eine Vielzahl von Mikrospiegeln oder Mikroprismen aufweist.

9. Sensor (10) nach einem der vorhergehenden Ansprüche,
wobei eine innere Grenzfläche (42) und eine äußere Grenzfläche (42) des Referenzauskopplungselements (32) zueinander geneigt sind und/oder wobei das Referenzauskopplungselement (32) eine Strukturierung mindestens einer Grenzfläche (42, 44) aufweist.

10. Sensor (10) nach einem der vorhergehenden Ansprüche,
wobei die Steuer- und Auswertungseinheit (30) dafür ausgebildet ist, die gemessene Lichtlaufzeit anhand des Referenzsignals zu korrigieren, insbesondere mit einem zweiten Referenzlichtempfänger (48).

11. Sensor (10) nach einem der vorhergehenden Ansprüche,
der einen Referenzlichtsender aufweist, um Lichtempfangselemente des Lichtempfängers (28), Referenzlichtempfangselemente des Referenzlichtempfängers (36) und/oder einen zweiten Referenzlichtempfänger (48) gleichzeitig zu beleuchten.

12. Sensor (10) nach einem der vorhergehenden Ansprüche,
wobei die Steuer- und Auswertungseinheit (30) dafür ausgebildet ist, anhand des Referenzsignals die Funktionsfähigkeit der Ablenkeinheit (20) und/oder des Lichtsenders (12) und/oder eine Verschmutzung einer Frontscheibe (38) zu prüfen.

13. Verfahren zur Erfassung von Objekten (40) in einem Erfassungsbereich (18), bei dem ein Sendelichtbündel (16) ausgesandt und zur Abtastung des Erfassungsbereichs (18) in verschiedene Ablenkwinkel abgelenkt wird, wobei ein Messsignal aus dem von den Objekten (40) remittierten Sendelichtbündel (24) und von einem Referenzlichtempfänger (36) mit einer Vielzahl von Referenzlichtempfangselementen, die jeweils unterschiedlichen Ablenkwinkeln zugeordnet sind, ein Referenzsignal aus einem mittels eines optischen Referenzauskopplungselements (32) im Strahlengang des Sendelichtbündels (16) ausgekoppelten Referenzlichtbündel (34) erzeugt werden und das Messsignal ausgewertet wird, um eine Eigenschaft des Objekt (40) zu erfassen, insbesondere dessen Abstand aus einer Lichtlaufzeit des ausgesandten und wieder empfangenen Sendelichtbündels (16, 24) zu bestimmen, und aus dem Referenzsignal der Ablenkwinkel bestimmt oder überprüft wird,
**dadurch gekennzeichnet,**
**dass** das Referenzauskopplungselement (32) in einer Elevationsrichtung gegenüber dem Sendelichtbündel (16) geneigt angeordnet ist.
